Europäisches Patentamt

European Patent Office

Office européen des brevets

(11) Publication number: **0 255 108 B1**

(12) **EUROPEAN PATENT SPECIFICATION**

(45) Date of publication of patent specification: **07.10.92**  (51) Int. Cl.⁵: **H04N 5/76, H04N 5/782**

(21) Application number: **87110918.7**

(22) Date of filing: **28.07.87**

(54) **Program preset control circuit.**

(30) Priority: **01.08.86 JP 182512/86**
**20.08.86 JP 194516/86**
**10.11.86 JP 267215/86**

(43) Date of publication of application:
**03.02.88 Bulletin 88/05**

(45) Publication of the grant of the patent:
**07.10.92 Bulletin 92/41**

(84) Designated Contracting States:
**DE FR GB IT**

(56) References cited:
**EP-A- 0 118 104**
**EP-A- 0 127 341**
**DE-A- 3 507 786**
**DE-A- 3 530 642**

(73) Proprietor: **SANYO ELECTRIC CO., LTD.**
**18, Keihanhondori 2-chome**
**Moriguchi-shi Osaka-fu(JP)**

(72) Inventor: **Morikawa, Shigekazu**
**J-302, 2172-1, Shindou**
**Tondabayashi-shi Osaka-fu(JP)**
Inventor: **Doumura, Tatsuaki No. 710,**
**Tamagushi-danchi, 11-53**
**Tamagushi-motomachi 2-chome**
**Higashiosaka-shi Osaka-fu(JP)**
Inventor: **Fujii, Takuya**
**No. 109, Sanyo Denki Suminodo-ryo**
**5-21, Hourai, 2-chome Daito-shi Osaka-fu(JP)**
Inventor: **Ibe, Shunji**
**No. 201, 9-5, Kashiwazato, 3-chome**
**Nishiyodogawa-ku Osaka-shi(JP)**

(74) Representative: **Glawe, Delfs, Moll & Partner**
**Patentanwälte**
**Postfach 26 01 62 Liebherrstrasse 20**
**W-8000 München 26(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a program preset control circuit for controlling program recording operation by recording means in response to a VPS code multiplexed on a broadcasting signal.

In West Germany, a program presetting system referred to as a VPS (video program system) has been widely used in a video tape recorder. The VPS is adapted such that timer recording of the video tape recorder can be controlled on the side of a broadcasting station when the broadcasting station superposes on a video signal a digitized code (VPS code) for identifying a program and broadcasts the same. The VPS is disclosed in detail in German Patent Laying-Open Gazettes DE-A-2950432 and DE-A-3243610.

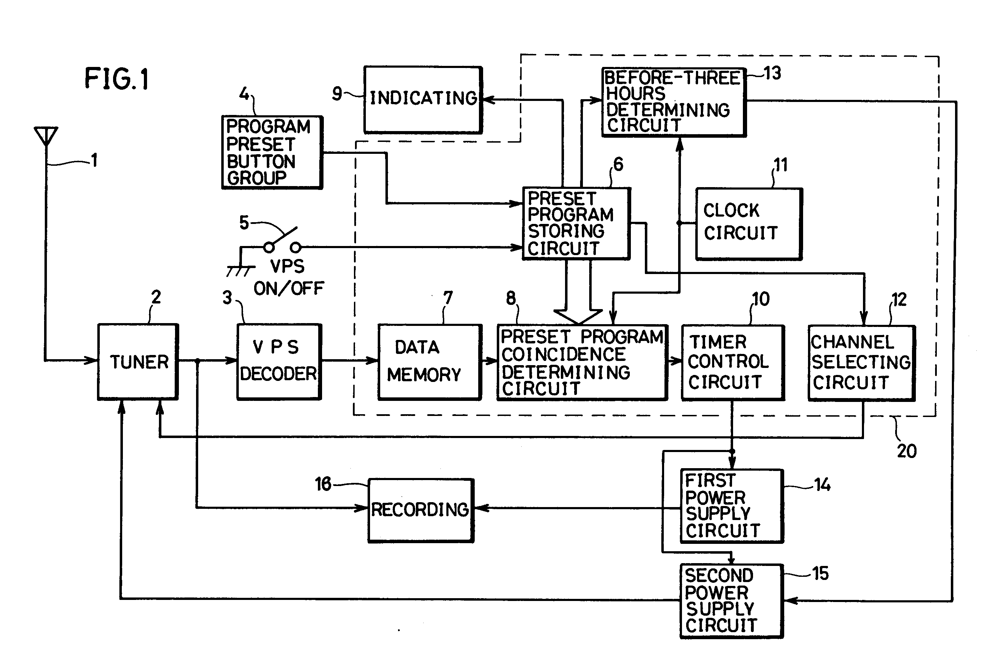

Referring now to Fig. 1, description is made on an example of a conventional program preset control circuit using such a VPS.

Preset program information is inputted to a preset program storing circuit 6 by operation of a program preset button group 4. The preset program storing circuit 6 stores the preset program information as a preset program code and provides the same to display means 9, so that the display means displays the information. The preset program code includes a starting time code concerning the starting time point of recording, a channel code concerning a preset program channel, and an ending time code concerning the ending time point of recording (or a recording time period). The present program storing circuit 6 also stores the set state of a VPS setting switch 5 for selecting a program preset mode. The program preset mode is set to a VPS program preset mode by turning the VPS setting switch 5 on and set to a normal program preset mode by turning the VPS setting switch 5 off. In the VPS program preset mode, a program is recorded in response to a VPS code multiplexed on a video signal independently of the starting time of recording and the ending time of recording as represented by the preset program code. In the normal program preset mode, the program is recorded from the starting time of recording to the ending time of recording in accordance with the actual time. The VPS code includes at least a program code showing the predicted starting time of a program.

In the VPS program preset mode, a before-three hours determining circuit 13 compares real-time information outputted from a clock circuit 11 with the starting time code stored in the preset program storing circuit 6 and starts operating a second power supply circuit 15 three hours, for example, before the starting time recording. Thus, a tuner 2 is driven. A channel selecting circuit 12 inputs a channel code stored in the preset program storing circuit 6 and applies a corresponding tuning voltage to the tuner 2. Thus, the tuner 2 selects a video signal corresponding to a preset program channel from a broadcasting signal obtained by an antenna 1 and applies the video signal to a VPS decoder 3. As a result, the VPS decoder 3 starts decoding the VPS code three hours before the starting time of recording and continues to send the same to a data memory 7.

A preset program coincidence determining circuit 8 compares a program code included in the VPS code stored in the data memory 7 with the starting time code stored in the preset program storing circuit 6 and outputs a coincidence signal when both coincide with each other. A timer control circuit 10 operates a first power supply circuit 14 in response to the coincidence signal. Thus, recording means 16 is driven by the power supply 14, so that recording of the video signal outputted from the tuner 2 is started. The recording is performed during a time period when the program code included in the above described VPS code continue to coincide with the starting time code included in the preset program code. Meanwhile, if the program code in the VPS code is changed to a code indicating interruption of the program (program interruption code), the recording means 16 is stopped to record with the tuner 2 and the VPS decoder 3 operating and if the original program code is again detected, the recording is restarted. When the program during recording ends, the program code included in the VPS code is changed, so that the coincidence signal is not outputted from the preset program coincidence determining circuit 8, resulting in ending of recording. Thus, in the VPS program preset mode, if the time for a desired program is changed and the time for a program is extended, the program can be surely recorded.

On the other hand, if the VPS code is not multiplexed on the video signal, the VPS code is not stored in the above described data memory 7. When the preset program coincidence determining circuit 8 determines that the VPS code is not stored in the data memory 7, recording is performed in the normal program preset mode.

In the normal program preset mode, the preset program coincidence determining circuit 8 compares the real-time information outputted from the clock circuit 11 with the starting time code stored in the preset program storing circuit 6 and outputs the coincidence signal when both coincide with each other. The timer control circuit 10 operates the first power supply circuit 14 and the second power supply circuit 15 in response to the coincidence signal. As a result, at the starting time of recording, recording is started. After recording is started, the preset program coincidence determining circuit 8 compares the real-time information outputted from the clock circuit 11 with the ending time code stored in the preset program storing circuit 6 and outputs the coincidence signal when both coincide with each other. The timer control circuit 10 stops operation of the first power supply circuit 14 and the second power supply circuit 15 in response to the coincidence signal and ends recording by recording means 16. Even if the VPS code is multiplexed on the video signal corresponding to the preset program channel, recording is performed in the above described normal program preset mode irrespective of the contents stored in the data memory 7 if the VPS setting switch 5 is set to the off state at the time of program presetting operation.

In Fig. 1, the portion 20 enclosed by a broken line is structured by a microcomputer.

In the above described conventional program preset control circuit, even if a user sets the program preset mode to the VPS program preset mode, the program preset mode is automatically switched to the normal program preset mode if the VPS code is not multiplexed on the video signal of the preset program channel. However, when the user sets the program preset mode to the VPS program preset mode, the ending time of recording may not be precisely set because the user is liable to rely on the VPS, and thus recording based on the normal program preset mode is not precisely performed in many cases.

A primary object of the present invention is to provide a program preset control circuit capable of indicating to a user that recording in a VPS program preset mode is impossible, so that the user precisely sets the ending time of recording when a video signal on which a VPS code is not multiplexed is preset and recorded.

The program preset control circuit according to the present invention, which is created in consideration of the fact that in a broadcasting channel on which a VPS code is multiplexed, the VPS code is always multiplexed, comprises preset program code setting means for setting a preset program code, determining means for determining whether or not recording based on the VPS code is possible, and indicating means for indicating the results determined by the above described determining means. The above described determing means determines whether or not the VPS code is included in a broadcasting signal at the time of setting the preset program code by the above described preset program code setting means, and hence determines whether or not recording based on the VPS code is possible. The above described indicating means indicates whether or not recording based on the VPS code is possible in response to an output from the above described determining means.

An advantage of the program preset control circuit according to the present invention is that a user can know whether or not VPS program presetting operation is possible at the time of setting preset program operation and precisely sets the ending time of recording if VPS program presetting operation is not possible, so that preset program recording can be precisely performed.

These objects and other objects, features, aspects and advantages of the present invention will become more apparent from the following detailed description of the present invention when taken in conjunction with the accompanying drawings.

Fig. 1 is a block diagram showing a conventional program preset control circuit;

Fig. 2 is a block diagram showing a program preset control circuit according to an embodiment of the present invention;

Fig. 3 is a block diagram showing a program preset control circuit according to another embodiment of the present invention.

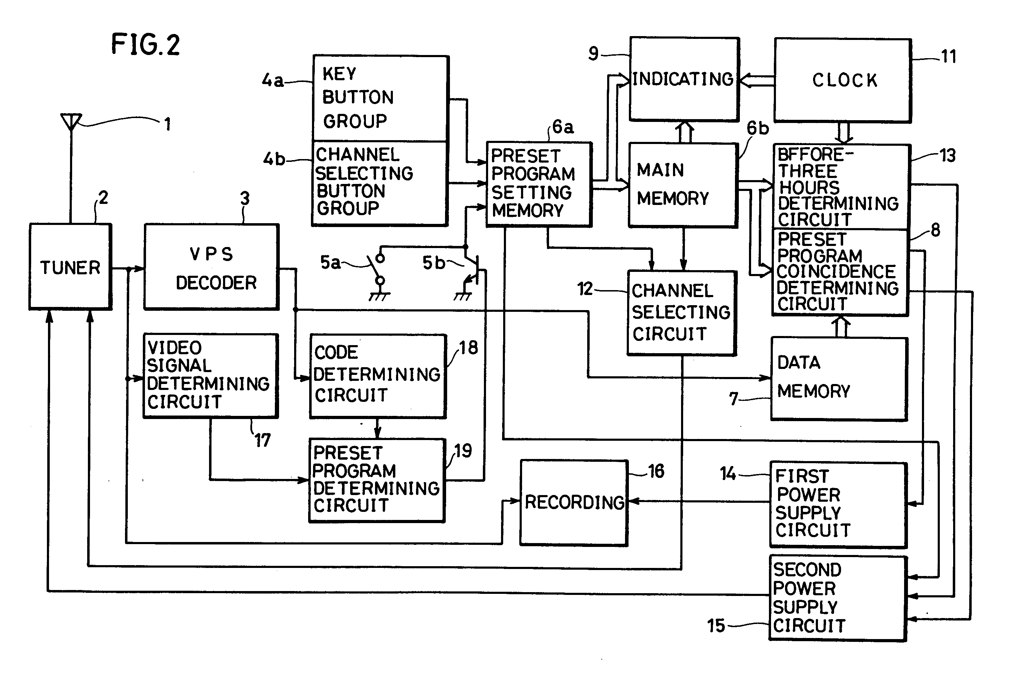

Fig. 2 is a block diagram showing a program preset control circuit according to an embodiment of the present invention. Referring now to Fig. 2, description is made on a structure and operation of the program preset control circuit.

In Fig. 2, the recording starting time information and the recording ending time information are inputted to a preset program setting memory 6a by operation of a key button group 4a and a preset program channel information is inputted thereto by a channel selecting button group 4b. The preset program information are stored in the preset program setting memory 6a as a preset program code and indicated by indicating means 9. The program code includes a recording starting code concerning the staring time of recording, a recording ending code concerning the ending time of recording, and a channel code concerning a preset program channel. The preset program setting memory 6a stores a program preset mode set by a VPS release switch 5a. The program preset mode is set to a normal program preset mode by turning the VPS release switch 5a on and set to a VPS program preset mode by turning the VPS release switch 5a off.

In the VPS program preset mode, a program is recorded in response to a VPS code multiplexed on a video signal independently of the starting time of recording and the ending time of recording represented by the preset program code. In the normal program preset mode, the program is recorded from the starting time of recording to the ending time of recording represented by the preset program code on an actual time basis. The VPS code includes a program code showing the predicted starting time of a program. In addition, the program code may be used as a code indicating interruption of a program (a program interruption code) and a code indicating switching to the normal program preset mode (a system status code) by setting the program code to an unreal time.

When operation for setting the starting time of recording is followed by operation for setting the preset program channel, the preset program setting memory 6a immediately operates a channel selecting circuit 10 and a second power supply circuit 15. The second power supply circuit 15 drives only a tuner 2. The channel selecting circuit 12 supplies a tuning voltage corresponding to the preset program channel to the tuner 2 in response to a channel code stored in the preset program setting memory 6a. Thus, the tuner 2 selects a video signal corresponding to the preset program channel from a broadcasting signal obtained by an antenna 1 and applies the video signal to a VPS decoder 3 and a video signal determining circuit 17.

The VPS decoder 3 decodes the VPS code from the video signal when the VPS code is multiplexed on the video signal and applies the VPS code to a code determining circuit 18. The code determining circuit 18 determines that the VPS decoder 3 detects the VPS code and applies a code detection signal to a preset program determining circuit 19. The video signal determining circuit 17 applies a video detection signal to the preset program determining circuit 19 when it detects the video signal. If the code detection signal is not applied but the video detection signal is applied to the preset program determining circuit 19, the preset program determining circuit 19 determines that the preset program channel does not use a VPS and applies a determination signal to a transistor 5b. Thus, the transistor 5b is rendered conductive, so that the program preset mode stored in the preset program setting memory 6a is set to the normal program preset mode by an output signal from the transistor 5b. At the same time, the contents set by the preset program setting memory 6a is indicated by indicating means 9 such as a display, so that a user can know by the indication whether or not VPS presetting operation of the preset program channel is possible. The reason why the preset program determining circuit 19 receives the video detection signal from the video signal determining circuit 17 is that the preset program determining circuit 19 confirms that the preset program channel is now being selected and then, determines whether or not the VPS code is multiplexed on the broadcasting signal.

Even if a user recognizes, through the indicating means 9, that the preset program channel is a broadcasting channel using the VPS, the user may turn the VPS release switch 5a on so that normal program presetting operation can be selected when VPS program presetting operation is not required.

If and when the VPS program presetting operation can not be performed or is not required, the user carefully operates the key button group 4a and performs operation for setting the ending time of recording (or the recording time period). Thus preset program code is transferred to a main memory 6b. The contents stored in the main memory 6b and real-time information outputted from a clock circuit 11 are indicated by the indicating means 9.

Meanwhile, possibility for VPS program presetting may be stored in advance for each channel so that the stored content can be indicated when a user presets a program. In this case, a user can know the possibility for VPS program presetting with respect to a desired channel, without receiving a broadcasting signal even in the midnight or even when a program is interrupted.

In the VPS program preset mode, a before-three hours determining circuit 13 compares the real-time information outputted from the clock circuit 11 with the starting time code stored in the main memory 6b and starts operating the second power supply circuit 15 three hours before the starting time of recording. Of course, it should be noted that this "three-hours" is merely by way of example and "four-hours" may be preferable. Thus, the tuner 2 is driven by the power supply. The channel selecting circuit 12 inputs the channel code stored in the main memory 6b and applies a corresponding tuning voltage to the tuner 2. Thus, the tuner 2 selects a video signal corresponding to the preset program channel from the broadcasting signal obtained by the antenna 1 and applies the video signal to the VPS decoder 3. As a result, the VPS decoder 3 starts decoding the VPS code three hours before the starting time of recording and continues to send the same to a data memory 7.

A preset program coincidence determining circuit 8 compares a program code included in the VPS code stored in the data memory 7 with the starting time code stored in the main memory 6b and operates a first power supply circuit 14 when both coincide with each other. Thus, recording means is driven by the power supply, so that recording of the video signal outputted from the tuner 2 is started.

When the program code included in VPS code sent to the data memory 7 is changed to the program interruption code, the preset program coincidence determining circuit 8 stops operation of the first power supply circuit 14 and interrupts recording operation. When the program code corresponding to the starting time code stored in the main memory 6b is included again in the VPS code, the preset program coincidence determining circuit 8 operates again the first power supply circuit 14 and restarts recording.

When the program code included in the VPS code is changed to another program code, the preset program coincidence determining circuit 8 stops operations of both the first power supply circuit 14 and the second power supply circuit 15 and ends recording. Thus, the tuner 2 selects a channel corresponding to the channel code as long as the program code included in the VPS code is not changed, and recording means 16 can record the identical program even when the program is interrupted. However, when the program code included in the VPS code is changed to the system status code, the VPS program preset mode is automatically switched to the normal program preset mode.

On the other hand, in the normal program preset mode, the before-three hours determining circuit 13 does not operate, and the preset program coincidence determining circuit 8 compares the real-time information outputted from the clock circuit 11 with the starting time code stored in the main memory 6b and operates the first power supply circuit 14 and the second power supply circuit 15 when both coincide with each other. Thus, the recording means 16 is driven by the power supply, so that recording of the video signal corresponding to the preset program channel is started. Thereafter, the preset program coincidence determining circuit 8 compares the real-time information from the clock circuit 11 with the ending time code stored in the main memory 6b (or a code concerning the starting time of recording plus the recording time period), and stops operation of the first power supply circuit 14 and the second power supply circuit 15 when both coincide with each other so that recording by the recording means 16 is ended.

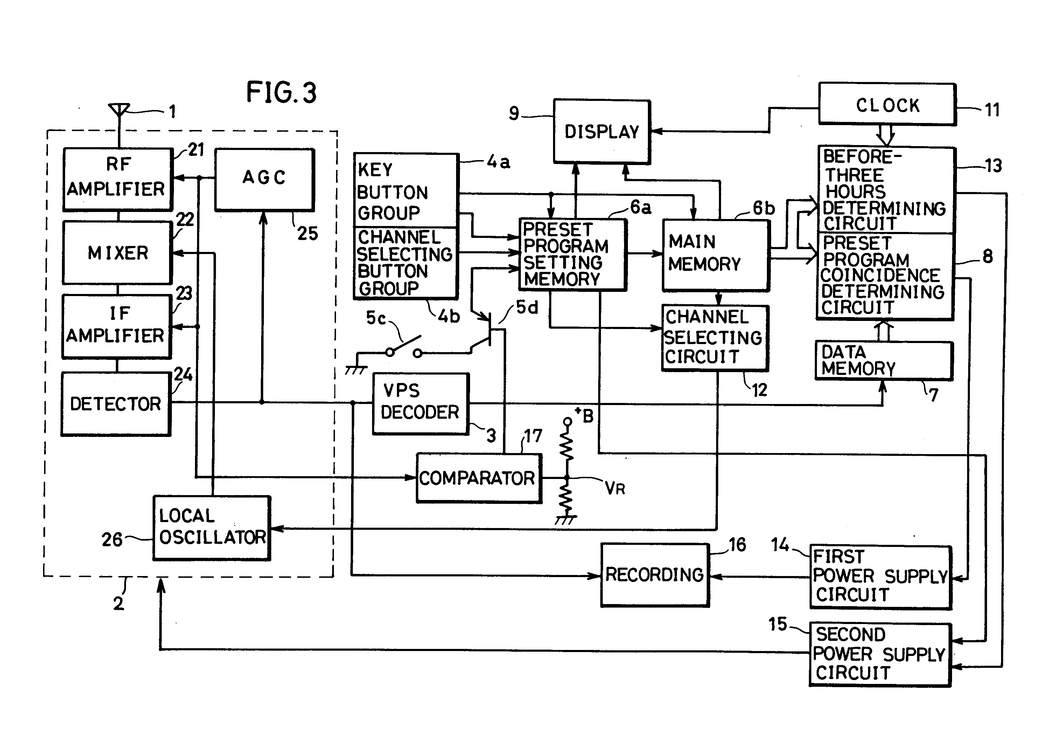

Referring now to Fig. 3, description is made on a program preset control circuit according to another embodiment of the present invention.

According to the present embodiment, a program preset mode is set by a VPS setting switch 5c. The program preset mode is set to a VPS program preset mode by turning the VPS setting switch 5c on and set to a normal program preset mode by turning the VPS setting switch 5c off. An output of the VPS setting switch 5c is inputted to a preset program setting memory 6a through a switching transistor 5d.

In Fig. 3, a tuner 2 includes an RF amplifier 21, a mixer 22, an IF amplifier 23, a detector circuit 24, an AGC circuit 25 and a local oscillator circuit 26. A broadcasting signal obtained by an antenna 1 is amplified by the RF amplifier 21, and then mixed with an output signal from the local oscillator circuit 26. Thus, an IF signal of a preset program channel is obtained. The IF signal is further amplified by the IF amplifier 23, and then demodulated by the detector circuit 24, so that a video signal is detected. The video signal is inputted to the AGC circuit 25. The AGC circuit 25 controls amplification gain of the RF amplifier 21 and the IF amplifier 23 depending on strength of the video signal.

The present embodiment is characterized in that it is determined whether or not a VPS code is detected based on the fact that an output voltage of the AGC circuit 25 is increased when the level of the received broadcasting signal is low. An output signal from the AGC circuit 25 is inputted to a comparator 17, where the output signal is compared with a reference voltage $V_R$. When the potential of the output signal from the AGC circuit 25 exceeds the reference voltage $V_R$, the comparator 17 generates an output signal at a predetermined potential level. The output signal is inputted to a base of the switching transistor 5d, so that the switching transistor 5d is turned off in response to the output signal.

Thus, even if the VPS setting switch 5c is set to the on-state, switching transistor 5d is turned off when an output level of the received broadcasting signal is low, so that the program preset mode in the preset program setting memory 6a is forced to be changed to the normal program preset mode. At the same time, the contents indicated by indicating means 9 is changed in accordance with the change of the mode.

Therefore, when a user recognizes the change of indication, the user considers that recording program presetting operation is performed in the normal program preset mode, so that the ending time of recording is precisely set.

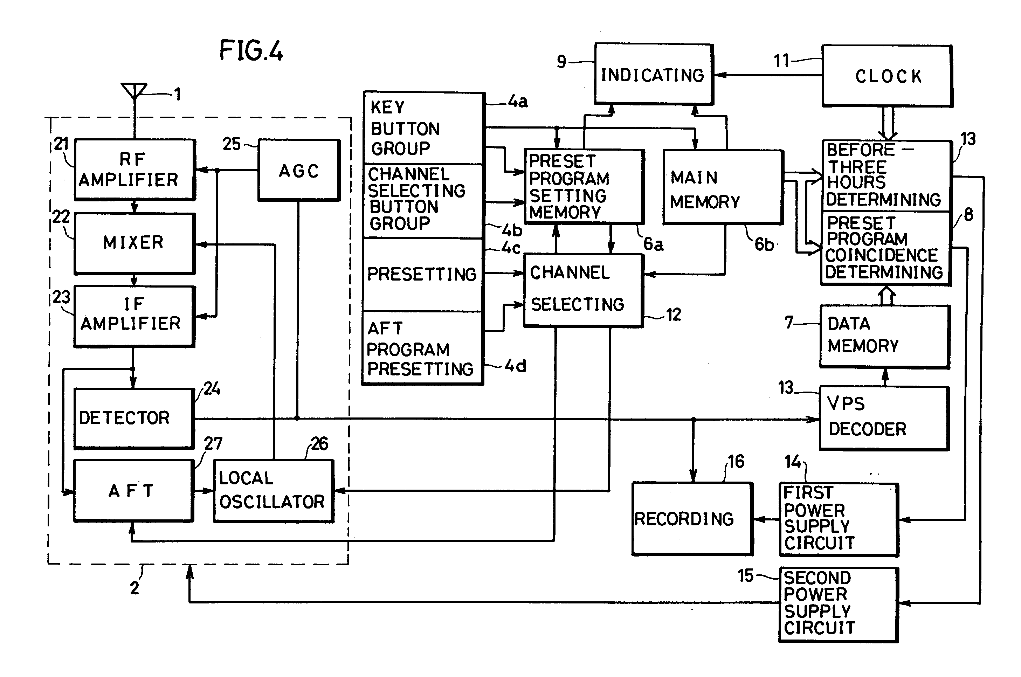

Referring now to Fig. 4, a program preset control circuit according to another embodiment of the present invention will be explained.

In Fig. 4, a tuner 2 is provided with an AFT circuit 27 for detecting deviation of the frequency of an IF signal and controlling a local oscillation frequency of a local oscillator circuit 26 in response to the deviation.

When the level of receiving a broadcasting signal is low, the receiving state is generally stabilized if the AFT circuit 27 is not operated, so that operation of the AFT circuit 27 is prohibited with respect to a channel in which the receiving level of the broadcasting signal is low. The present embodiment is characterized in that when the broadcasting signal of the channel in which operation of the AFT circuit 27 is prohibited is to be preset and recorded, it is indicated at the time of preset program setting operation that VPS program presetting operation is difficult with respect to the channel.

A tuning voltage of a channel corresponding to each channel selecting button of a channel selecting button group 4b is set to a channel selecting circuit 12 by operation of presetting means 4c. In addition, the on/off state of the AFT circuit 27 is set with respect to each channel selecting button of the channel selecting button group 4b by operation of AFT program presetting means 4d. More specifically, information as to whether or not the VPS program presetting operation is possible is stored in the channel selecting circuit 12 every channel selecting button.

In such a state, when the starting time of recording and a preset program channel are inputted to a preset program setting memory 6a by a key button group 4a and the channel selecting button group 4b at the time of program presetting operation, the channel selecting circuit 12 applies on-off information of the AFT circuit 27 concerning the preset program channel to the preset program setting memory 6a. Either a VPS program preset mode or a normal program preset mode is automatically set to the preset program setting memory 6a in accordance with on-off information of the AFT circuit 27. At that time, indicating means indicates the starting time of recording and the preset program channel and whether or not the VPS program presetting operation is possible in accordance with the on-off information of the AFT circuit 27. Therefore, even in the midnight or even when a program is interrupted, a user can identify the possibility of the VPS program presetting with respect to the preset program channel, without receiving a broadcasting signal immediately after operation of the channel switching button and then, set the ending time of recording.

The preset program code thus set is transferred from the preset program setting memory 6a to a main memory 6b by operation of a confirming button included in the key button group 4a. Thereafter, in the same manner as in the embodiment shown in Fig. 2, the VPS program preset mode or the normal program preset mode are performed.

However, according to the present embodiment, the channel selecting circuit 12 applies the on-off information to the AFT circuit 27 in the tuner 2 at the time of recording. As a result, AFT operation is controlled by the channel selecting circuit 12 at the time of tuning.

Although the present invention has been described and illustrated in detail, it is clearly understood that the same is by way of illustration and example only and is not to be taken by way of limitation, the scope of the present invention being limited only by the terms of the appended claims.

## Claims

1. A program preset control circuit for controlling operation of recording means in response to a VPS code multiplexed in a broadcasting signal, comprising:

   preset program code setting means (4a, 4b, 6a) for setting a preset program code effective to preset a channel,

   determining means (2, 3, 17, 18, 19) for determining whether or not the VPS code is included in a broadcasting signal of said preset channel at the time of setting the preset program code by said preset program code setting means for determining whether or not recording based on the VPS code is possible, and

   indicating means (9) responsive to an output from said determining means for producing an indication whether or not recording based on the VPS code is possible.

2. A program preset control circuit in accordance with claim 1, wherein

   said determining means comprises

   video signal determining means (17) responsive to an output from a video signal receiving means (2) for determining whether or not the video signal is detected,

   VPS decoding means (3) responsive to an output of said video signal receiving means (2) for decoding a VPS code from the received video signal,

   code determining means (18) responsive to an output of said VPS decoding means (3) for determining whether or not the VPS code is detected and

   presettable program determining means (19) responsive to outputs from said code determining means (18) and said video signal determining means (17) for generating an output to said indicating means (9).

3. A program preset control circuit in accordance with claim 2, wherein

   said video signal detecting means comprises a tuner (2).

4. A program preset control circuit in accordance with claim 1, wherein

   said preset program code includes a code concerning the starting time of recording, a code concerning a preset program channel and a code concerning the ending time of recording.

5. A program preset control circuit in accordance with claim 1, wherein

   said preset program code setting means comprises

   preset program code inputting means (4a, 4b) for inputting said preset program code, and

   preset program storing means (6a) for storing the preset program code inputted by said preset program code inputting means.

6. A program preset control circuit in accordance with claim 5, wherein

said preset program code inputting means comprises

a key button group (4a) for inputting the starting time of recording and the ending time of recording, and

a channel selecting button group (4b) for inputting the preset program channel.

7. A program preset control circuit in accordance with claim 5, wherein

said indicating means (9) indicates whether or not recording based on the VPS code is possible before at least said ending time of recording is set by said preset program code setting means (4a, 4b, 6a).

**Patentansprüche**

1. Programmvorwahl-Steuerschaltung zum Steuern des Betriebes eines Aufzeichnungsgerätes in Abhängigkeit von einem in einem Sendesignal als Multiplexsignal enthaltenen VPS-Code, mit:
Programmwahlcode-Einstellmitteln (4a, 4b, 6a) zum Einstellen eines Programmwahlcodes, der die Einstellung eines Kanals bewirkt;
Feststellmitteln (2, 3, 17, 18, 19) zum Feststellen, ob ein VPS-Code in dem Sendesignal des eingestellten Kanals zum Zeitpunkt der Eingabe des Programmwahlcodes für die Programmwahlcode-Einstellmittel enthalten ist oder nicht, um festzustellen, ob eine Aufzeichnung basierend auf dem VPS-Code möglich ist oder nicht, und
Anzeigemitteln (9), die auf ein Ausgangssignal von den Feststellmitteln ansprechen und eine Anzeige bewirken, ob eine Aufzeichnung basierend auf dem VPS-Code möglich ist oder nicht.

2. Programmvorwahl-Steuerschaltung nach Anspruch 1, wobei die Feststellmittel umfassen:
Videosignal-Feststellmittel (17), die auf ein Ausgangssignal von Videosignal-Empfangsmitteln (2) ansprechen, zum Festlegen ob das Videosignal detektiert wird oder nicht, VPS-Dekodiermittel (3), die auf ein Ausgangssignal von den Videosignal-Empfangsmitteln (2) ansprechen, zum Detektieren eines VPS-Codes aus dem empfangenen Videosignal,
Code-Feststellmittel (18), die auf ein Ausgangssignal von den VPS-Dekodiermitteln (3) ansprechen, zum Festlegen, ob der VPS-Code detektiert wird oder nicht, und
voreinstellbare Programmfeststellmittel (19), die auf Ausgangssignale der Code-Feststellmittel (18) und der Videosignal-Feststellmittel (17) ansprechen, zum Erzeugen eines Ausgangssignals an die Anzeigemittel (9).

3. Programmvorwahl-Steuerschaltung nach Anspruch 2, wobei die Videosignal-Detektiermittel einen Tuner umfassen.

4. Programmvorwahl-Steuerschaltung nach Anspruch 1, wobei der Programmwahlcode einen Code, der die Startzeit der Aufnahme betrifft, einen Code, der einen Programmwahlkanal betrifft, und einen Code, der die Endzeit der Aufnahme betrifft, enthält.

5. Programmvorwahl-Steuerschaltung nach Anspruch 1, wobei die Programmwahlcode-Einstellmittel
Programmwahlcode-Eingabemittel (4a, 4b) zum Eingeben des Programmwahlcodes und Programmwahlcode-Speichermittel (6a) zum Speichern des Programmwahlcodes, der durch die Programmwahlcode-Eingabemittel eingegeben wird, umfassen.

6. Programmvorwahl-Steuerschaltung nach Anspruch 5, wobei die Programmwahlcode-Eingabemittel
eine Tastatur (4a) zum Eingeben der Aufnahmestartzeit und der Aufnahmeendzeit und eine Kanaleinstelltastengruppe (4b) zum Eingeben des Programmwahlkanals umfassen.

7. Programmvorwahl-Steuerschaltung nach Anspruch 5, wobei die Anzeigemittel (9) anzeigen, ob eine Aufzeichnung basierend auf dem VPS-Code möglich ist oder nicht, bevor mindestens die Aufnahmeendzeit durch die Programmwahlcode-Einstellmittel (4a, 4b, 6a) eingestellt wird.

**Revendications**

1. Circuit de commande de présélection de programme pour commander le fonctionnement d'un moyen d'enregistrement en réponse à un code VPS multiplexé dans un signal de radio diffusion, comprenant :

un moyen d'établissement de code de programme présélectionné (4a, 4b, 6a) pour établir un code de programme présélectionné effectif pour présélectionner un canal,

un moyen de détermination (2, 3, 17, 18, 19) pour déterminer si oui ou non le code VPS est inclus dans un signal de radio diffusion du canal présélectionné au moment de l'établissement du code de programme présélectionné par le moyen d'établissement de code de programme présélectionné pour déterminer si oui ou non l'enregistrement basé sur le code VPS est possible, et

　　un moyen d'indication (9) sensible à une sortie provenant du moyen de détermination pour indiquer si oui ou non l'enregistrement basé sur le code VPS est possible.

2.　Circuit de commande de présélection de programme selon la revendication 1, dans lequel

　　le moyen de détermination comprend

　　un moyen de détermination de signal vidéo (17) sensible à une sortie provenant d'un moyen de réception de signal vidéo (2) pour déterminer si oui ou non le signal vidéo est détecté,

　　un moyen de décodage VPS (3) sensible à une sortie du moyen de réception de signal vidéo (2) pour décoder un code VPS à partir du signal vidéo reçu,

　　un moyen de détermination de code (18) sensible à une sortie du moyen de décodage VPS (3) pour déterminer si oui ou non le code VPS est détecté, et

　　un moyen de détermination de programme présélectionnable (19) sensible aux sorties provenant du moyen de détermination de code (18) et du moyen de détermination de signal vidéo (17) pour produire une sortie vers le moyen d'indication (9).

3.　Circuit de commande de présélection de programme selon la revendication 2, dans lequel

　　le moyen de détection de signal vidéo comprend un dispositif d'accord (2).

4.　Circuit de commande de présélection de programme selon la revendication 1, dans lequel

　　le code de programme présélectionné comporte un code se rapportant à l'heure de début de l'enregistrement, un code se rapportant au canal de programme présélectionné et un code se rapportant à l'heure de fin de l'enregistrement.

5.　Circuit de commande de présélection de programme selon la revendication 1, dans lequel

　　le moyen d'établissement de code de programme présélectionné comprend

　　un moyen d'entrée de code de programme présélectionné (4a, 4b) pour entrer le code de programme présélectionné, et

　　un moyen de mémorisation de programme présélectionné (6a) pour mémoriser le code de programme présélectionné entré par le moyen d'entrée de code de programme présélectionné.

6.　Circuit de commande de présélection de programme selon la revendication 5, dans lequel

　　le moyen d'entrée de code de programme présélectionné comprend

　　un groupe de touches (4a) pour entrer l'heure de début d'enregistrement et l'heure de fin d'enregistrement, et

　　un groupe de touches de sélection de canal (4b) pour entrer le canal de programme présélectionné.

7.　Circuit de commande de présélection de programme selon la revendication 5, dans lequel

　　le moyen d'indication (9) indique si oui ou non l'enregistrement basé sur le code VPS est possible avant au moins l'heure de fin d'enregistrement qui est établie par le moyen d'établissement de code de programme présélectionné (4a, 4b, 6a).

# FIG.1

EP 0 255 108 B1

# FIG.2

TUNER

VPS DECODER

KEY BUTTON GROUP

CHANNEL SELECTING BUTTON GROUP

PRESET PROGRAM SETTING MEMORY

INDICATING

CLOCK

MAIN MEMORY

BFFORE-THREE HOURS DETERMINING CIRCUIT

PRESET PROGRAM COINCIDENCE DETERMINING CIRCUIT

VIDEO SIGNAL DETERMINING CIRCUIT

CODE DETERMINING CIRCUIT

CHANNEL SELECTING CIRCUIT

DATA MEMORY

PRESET PROGRAM DETERMINING CIRCUIT

RECORDING

FIRST POWER SUPPLY CIRCUIT

SECOND POWER SUPPLY CIRCUIT

EP 0 255 108 B1

FIG.3

EP 0 255 108 B1

FIG.4